# EUROPEAN PATENT SPECIFICATION

(11) **EP 0 423 148 B1**
(45) Date of publication and mention of the grant of the patent: **23.08.1995**
(21) Application number: 89906289.7
(22) Date of filing: 01.05.1989
(51) Int. Cl.: C07F 5/04, C10M 139/00

(54) **DIHYDROXYARYL-HYDROXYALIPHATIC BORATES USEFUL AS LUBRICANT ANTIOXIDANTS AND LUBRICANTS CONTAINING SAME**
ALS ANTIOXIDATIONS-SCHMIERMITTELZUSATZ VERWENDBARE DIHYDROXYARYL-HYDROXYALIPHATISCHE BORATE UND DIESE ENTHALTENDE SCHMIERMITTEL
BORATES DIHYDROXYARYL-HYDROXYALIPHATIQUES UTILES COMME ANTIOXYDANTS DE LUBRIFIANTS, ET LUBRIFIANTS LES CONTENANT

(43) Date of publication of application: 24.04.1991
(73) Proprietor: MOBIL OIL CORPORATION, New York New York 10017 (US)
(72) Inventor: FARNG, Liehpao, Oscar, Lawrenceville, NJ 08648 (US); HORODYSKY, Andrew, Gene, Cherry Hill, NJ 08003 (US)
(74) Representative: Colmer, Stephen Gary
(86) International application number: US8901849
(87) International publication number: WO9013551

(56) References cited:
- US-A- 2 975 134
- US-A- 3 267 177
- US-A- 3 445 498
- US-A- 3 523 014

## Description

This application is directed to dihydroxyaryl-hydroxyaliphatic borates useful as multifunctional/antioxidant additives in lubricant compositions containing small concentrations of said dihydroxyaryl-hydroxyaliphatic borates.

Hydroxyaryls are known for their antioxidant properties in a variety of petroleum and non-petroleum products. The use of borates has found extensive application in such diverse areas as grease additives, brake and hydraulic fluids, and field and combustion additives. The use of hydroxyaliphatics such as hydroxyesters has been widely reported as having beneficial multifunctional characteristics in a variety of fuel and lubricant applications.

It has now been found that novel mixed dihydroxyaryl-hydroxyaliphatic borates provide exceptional antioxidant and corrosion inhibiting activity with the potential for antifatigue, friction reducing, antirust and high temperature stabilizing properties. These novel borates are highly useful no only in oils of lubrication viscosity but also in solid lubricants such as greases.

U.S. Patent No. 3,445,498 relates to a borated reaction product of resorcinol or hydroquinone and an N,N-di-substituted hydroxyamine, such as an N,N-di-substituted alkanolamine as an antioxidant in lubricants.

U.S. Patent No. 2,975,134 relates to a boron partial ester or triester product.

It has now been discovered that dihydroxyaryl-hydroxyaliphatic borates possess excellent antioxidant activity when incorporated into lubricant compositions. Typical dihydroxyaryl compounds include hydroquinone, alkyl-substituted hydroquinones, resorcinol (1,3-dihydroxybenzene) and alkyl-substituted resorcinols.

Although not wishing to be bound by a particular theory both the dihydroxyaryl moiety and the borate ester derived by reaction of the hydroxyaliphatic with borating agent are believed to provide the basis for synergistic antioxidant activity. Optionally, a plurality of moieties can be introduced to contribute additional antirust and/or friction reducing properties to the additives. These beneficial properties are believed to be enhanced as a result of this novel internal synergism. This internal synergism concept is believed to be especially applicable to structures containing dihydroxyaryl, borate ester and hydroxyester (preferably diol containing) moieties within the same molecule. The products disclosed herein also show good compatibility when used in the presence of other additives in the lubricant compositions.

The reaction product of the present invention is preparable by reacting (1) an unsubstituted or hydrocarbyl substituted hydroquinone or resorcinol of the formula: 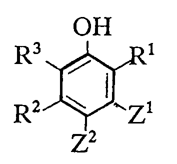
wherein R¹, R² and R³ represent a hydrogen atom or a C₁ to C₃₀ hydrocarbyl group; and one of Z¹ and Z² represents a hydroxyl group while the other represents a hydrogen atom or a C₁ to C₃₀ hydrocarbyl group; with
(2) an aliphatic hydroxyester containing at least one free hydroxyl group; and
(3) a borating agent.

Generally the reaction is carried out with molar ratios of (I) to aliphatic hydroxyester from 10:1 to 1:10, preferably 3:1 to 1:3; and the borating agent is present in amounts sufficient to react with 5 to 100%, preferably 80 to 100% of the hydroxyl groups of (I) and aliphatic hydroxyester available for boration. In some cases an excess of borating agent providing up to 3 times the stoichoimetric ratio is useful to impart additional desirable properties to the reaction product.

Suitable temperatures for the above reaction are from 60 to 250°C, preferably 80 to 135°C. The reaction can take place under ambient or autogenous pressures.

The aliphatic hydroxyester can be selected from one or more of any hydroxyester having the formula: 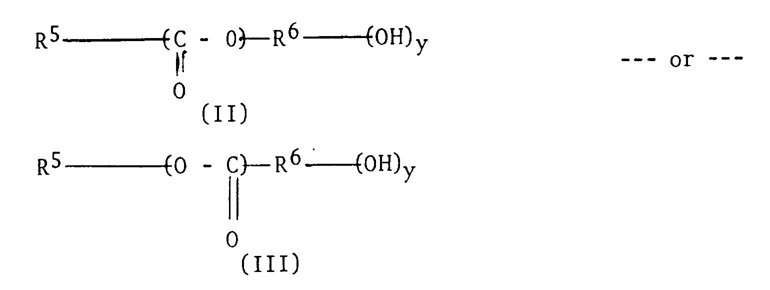
where y is 1 or 2 and where R⁵ and R⁶ are each independently C₃-C₃₀ hydrocarbyl. A preferred hydroxyester is 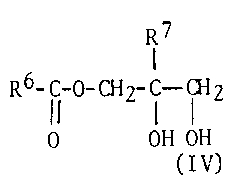
where R⁶ is as given above and R⁷ is H or CH₂OH.

The hydroxyesters suitable for use herein contain at least one free hydroxyl group but may contain two or more. The hydroxyesters also contain one ester group (as in glycerol monooleate) or more (as in glycerol dioleate). The esters can be used in pure form, or preferably in mixtures such as mixtures of glycerol mono- and dioleate. The hydrocarbyl R groups may be alkyl, straight or branched, cyclic or substituted; and may contain one or more double bonds, halogen or one or more sulfur atoms or aromatic rings. Suitable hydroxyesters may be made by the reaction of polyhydroxy alcohols with organic acids, e.g., glycerol and oleic acid reacted to form glycerol monooleate. Thioglycerol hydroxyesters can also be used. Sorbitan hydroxyesters and hydroxyesters prepared from trimethylolpropane and pentaerythritol are also useful, e.g., sorbitan monooleate, trimethylolpropane monooleate, trimethylolpropane dioleate and pentaerythritol dioleate monolaurate.

The borating agent can be an appropriate boron compound, including, but not limited to, boric acid, boric oxide, metaborates or a compound of the formula

(R¹⁰O)ₘ B(OH)ₙ

wherein R¹⁰ is a C₁ to C₆ alkyl group, m is 0 to 3 and n is 0 to 3, their sum being 3. As indicated by the formula, included are boric acid and the alkylborates, such as the mono-, di- and trialkyl borates.

Dihydroxyaromatic compounds used in the present invention include 1,3-dihydroxybenzene (resorcinol), 1,4-dihydroxybenzene (hydroquinone), as well as their hydrocarbyl substituted analogs. Representative high molecular weight alkyl-substituted dihydroxyaromatic compounds include those wherein the alkyl group will have from 1 to 30 carbon atoms. The alkyl group may be derived from a simple alkene or from a polymer or copolymer of such alkenes. The alkene may be selected from 1-octene, 1-decene or 1-dodecene. The polymers or copolymers may be made from these or from other olefins such as ethene, propene, butene or isobutene.

Typical hydroquinones which may be employed include 2,5-ditertiary butyl hydroquinone; hydroquinone monomethyl ether; monotertiary butyl hydroquinone; hydroquinone; and hydroquinone monobenzyl ether. Resorcinol and its analogs similar to the above hydroquinone analogs may also be used.

The borated derivatives are conveniently produced by the reaction of the selected mixture of compounds with, for example, boric acid, in the presence of a suitable solvent or solvents. Specific reactor conditions and molar equivalents can be readily determined by one of ordinary skill in the art. Besides direct treatment with boric acid, other boration procedures known in the art can be used, for example, transesterification with a trialkylborate such as tributylborate. In any event, the boration procedure generally adopted is conveniently a one-pot, one-step process. The resulting borated materials provided as noted previously and containing from 12 to 48 or more carbon atoms are much more effective as antioxidant/friction reducing lubricant additives than their non-borated counterparts or physical mixtures of the individual borated materials.

In one embodiment, 1,4-dihydroxybenzene (hydroquinone) is co-borated with glycerol oleate (60% glycerol monooleate, 40% glycerol dioleate) to form mixed borate esters having the structure, as generally described below: 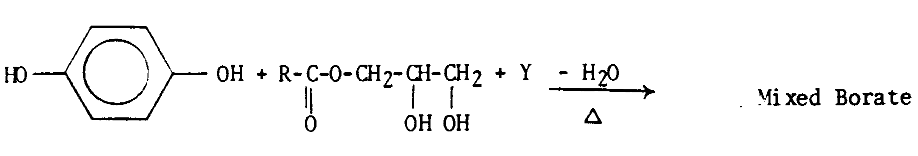
where R is C₈-C₂₀ hydrocarbyl and Y is the boronating agent.

The borated mixed materials of the invention possess antioxidant and corrosion inhibiting properties not generally found in the non-borated material and are superior to equivalent physical mixtures of the individual borated materials. The higher molecular weight borated mixtures also appear to be relatively resistant to hydrolysis and retain their multifunctional characteristics even after being in the presence of water at elevated temperatures.

The additive product of the invention improves the resistance to oxidation of oleaginous materials such as lubricating oils, either a mineral oil or a synthetic oil, or mixtures thereof, or a grease in which any of the aforementioned oils are employed as a vehicle. In general, mineral oils, both paraffinic, naphthenic and mixtures thereof, employed as a lubricating oil or as the grease vehicle, may be of any suitable lubricating viscosity range, as for example, from 5.9 to 1300 cs at 38°C (45 to 6,000 SUS at 100°F), preferably from 7.4 to 54 cs at 100°C (50 to 250 SUS at 210°F). These oils may have viscosity ranging to 100 or higher. Viscosity indexes from 70 to 95 are preferred. The average molecular weights of these oils may range from 250 to 800. Where the lubricant is to be employed in the form of a grease, the lubricating oil is generally employed in an amount sufficient to balance the total grease composition, after accounting for the desired quantity of the thickening agent, and other additive components to be included in the grease formulation. A wide variety of materials may be employed as thickening or gelling agents. These may include any of the conventional metal salts or soaps, which are dispersed in the lubricating vehicle in grease-forming quantities in an amount to impart to the resulting grease composition the desired consistency. A narrow class of thickening agents is preferred to make the grease of this invention. Included among the preferred thickening agents are those containing at least a portion of alkali metal, alkaline earth metal or amine soaps of hydroxyl-containing fatty acids, (hydroxycarboxylate soap) fatty glycerides and fatty esters having from 12 to 30 carbon atoms per molecule. Th metals are typified by sodium, lithium, calcium and barium. Preferred is lithium. Preferred members among these acids and fatty materials are 12-hydroxystearic acid and glycerides containing 12-hydroxystearates, 14-hydroxystearic acid, 16-hydroxystearic acid and 6-hydroxystearic acid.

The entire amount of thickener need not be derived from the aforementioned preferred members. Significant benefit can be attained using as little thereof as 15% by weight of the total thickener. A complementary amount, i.e., up to 85% by weight of a wide variety of thickening agents can be used in the grease of this invention. Included among the other useful thickening agents are alkali and alkaline earth metal soaps of methyl-12-hydroxystearate, diesters of a C₄ to C₁₂ dicarboxylic acid and tall oil fatty acids. Other alkali or alkaline earth metal acids containing from 12 to 30 carbon atoms and no free hydroxyl may be used. These include soaps of stearic and oleic acids. Other thickening agents that may be employed in the grease formulation may comprise the non-soap thickeners, such as surface-modified clays and silicas, aryl ureas, calcium complexes and similar materials. In general, grease thickeners may be employed which do not melt and dissolve when used at the required temperature within a particular environment; however, in all other respects, any material which is normally employed for thickening or gelling hydrocarbon fluids for forming grease can be used in preparing the aforementioned improved grease in accordance with the present invention.

With respect to the preparation of the grease, the thickener will have at least 15% by weight of a metal or non-metal hydroxy-containing soap therein, the total thickener being from 3% to 20% by weight of the grease composition.

In instances where synthetic oils, or synthetic oils employed as the vehicle for the grease, are desired in preference to mineral oils, or in preference to mixtures or mineral and synthetic oils, various synthetic oils of this type may be successively utilized. Typical synthetic vehicles include polyisobutylenes, polybutenes, hydrogenated polydecenes, polypropylene glycol, polyethylene glycol, trimethylol propane esters, neopentyl and pentaerythritol esters, di(2-ethylhexyl)sebacate, di(2-ethylhexyl)adipate, dubutyl phthalate, fluorocarbons, silicate esters, silanes, esters of phosphorus-containing acids, liquid ureas, ferrocene derivatives, hydrogenated synthetic oils, chain-type polyphenyls, siloxanes and silicones (polysiloxanes) and alkl-substituted bis(p-phenoxy phenyl)ether and phenoxy phenylethers.

It is to be understood that the compositions contemplated herein can also contain other materials. For example, other corrosion inhibitors, extreme pressure agents, viscosity index improvers, coantioxidants or antiwear agents can be used. These include, but are-not limited to, phenates, sulfonates, succinimides or zinc dialkyldithiophosphates. These materials do not detract from the value of the compositions of this invention; rather the materials serve to impart their customary properties to the particular compositions in which they are incorporated.

Mineral oil heat exchange fluids particularly contemplated in accordance with the present invention have the following characteristics: high thermal stability, high initial boiling point, low viscosity, high heat-carrying-ability and low corrosion tendency.

Further, the transmission fluids of consequence to the present invention are blends of highly refined petroleum base oils combined with VI improvers, detergents, defoamants and special additives to provide controlled-friction or lubricity characteristics. Varied transmission design concepts have led to the need for fluids with markedly different frictional characteristics, so that a single fluid cannot satisfy all requirements. The fluids intended for use in passenger car and light-duty truck automatic transmissions are defined in the ASTM Research Report D-2, RR 1005 on "Automatic Transmission Fluid/Power Transmisson Fluid Property and Performance Definitions. Specifications for low-temperature and aircraft fluids are defined in U.S. Government Specification MIL-H-5606A.

In general, the reaction products of the present invention may be employed in any amount which is effective for imparting the desired degree of antioxidant activity. In these applications, the product is effectively employed in amounts from 0.1% to 10% by weight, and preferably from 1% to 5% of the total weight of the composition.

### EXAMPLES

### Example 1

Approximately 178g commercial glycerol monooleate, 55g hydroquinone, 31g boric acid and 200ml toluene were mixed in a reactor equipped with heater, agitator and Dean-Stark tube with condenser. The reactants were heated at 114°C over a period of six hours during which 25g water was collected during azeotropic distillation. The solution was filtered to remove 1.0g solids and the volatiles were removed by distillation at reduced pressure.

### Evaluation

Selected samples of the mixed hydroquinone-hydroxyester borates were blended into fully formulated oils and evaluated for antioxidant performance in a Catalytic Oxidation Test at 163°C (325°F) for 40 hours (Table 1); Catalytic Oxidation Test at 127°C (260°F) for 80 hours (Table 2); and Catalytic Oxidation Test at 191°C (375°F) for 24 hours (Table 3). The test lubricant composition is subjected to a stream of air which is bubbled through the composition at a rate of 5 liters per hour. Present in the composition comprising a 32 centistokes kinematic viscosity (150 Saybolt second) solvent refined paraffinic bright oil in addition to the additive compound were metals commonly used as materials to construct engines namely:
(a) 101 cm² (15.6 sq. in.) of sand-blasted iron wire;
(b) 5.0 cm² (0.78 sq. in.) of polished copper wire;
(c) 5.6 cm² (0.87 sq. in.) of polished aluminum wire; and
(d) 0.69 cm² (0.107 sq. in.) of polished lead surface.

The test results are reported below in the tables.

A comparision of the oxidation-inhibiting characteristics of the inventive products with the other traditional antioxidants in fully formulated oils is also included in Table 1.

**TABLE 1**

| Catalytic Oxidation Test 40 Hours at 191°C (325°F) | | | | |
|---|---|---|---|---|
| | Additive Conc. (Wt.%) | Percent Change in Acid Number TAN | Percent Change in Viscosity KV | Sludge |
| Base Oil 32 cs (150 second), fully formulated, solvent refined paraffinic bright oil containing defoamant/deemulsifier/antiwear/anticorrosion/EP/antirust performance package | - | 2.58 | 30.61 | Nil |
| Example 1 | 1.0 | 1.78 | 26.47 | Trace |
| Hydroquinone | 0.1* | 1.99 | 27.92 | Trace |
| Hydroquinone Borate | 0.1* | - | 26.79 | Trace |

| | | | | |
|---|---|---|---|---|
| * Maximum Solubility | | | | |

**TABLE 2**

| Catalytic Oxidation Test 80 Hours at 127°C (260°F) | | | | |
|---|---|---|---|---|
| | Additive Conc. (Wt.%) | Percent Change in Acid Number TAN | Percent Change in Viscosity KV | Sludge |
| Base Oil 32 cs (150 second), fully formulated, solvent refined paraffinic bright oil containing defoamant/deemulsifier/antiwear/anticorrosion/EP/antirust performance package | - | 0.01 | 6.48 | Nil |
| Example 1 | 1.0 | -0.25 | 5.27 | Nil |

**TABLE 3**

| Catalytic Oxidation Test 24 Hours at 191°C (375°F) | | | | |
|---|---|---|---|---|
| | Additive Conc. (Wt.%) | Percent Change in Acid Number TAN | Percent Change in Viscosity KV | Sludge |
| Base Oil 32 cs (150 second), fully formulated, solvent refined paraffinic bright oil containing defoamant/deemulsifier/antiwear/anticorrosion/EP/antirust performance package | - | 6.53 | 177.9 | Medium |
| Example 1 | 1.0 | 3.68 | 83.5 | Medium |

### Example 2

Approximately 3.3g resorcinol, 55.6g boric acid, 151.2g of Neodol 25.3, 100g glycerol monooleate, and 200 ml toluene were mixed and reacted in a similar fashion as described in Example 1. 31g water was azeotropically removed as side product. The borated product was filtered through diatomaceous earth and approximately 308g of viscous, brown fluid was recovered.

### Example 3

### Resorcinol-glycerol monooleate mixed borates

Approximately 22.8g resorcinol, 150g glycerol monooleate (commercially obtained from Quantum Chemical Co.), 20.6g boric acid, and 150 ml toluene were mixed in a reactor equipped with heater, stirrer, and Dean-Stark trap. The reactants were heated at 90 °C for an hour, then at 110-115°C for three hours, during which water (10g) was azeotropically collected. Thereafter, the volatiles were removed by distillation at reduced pressure and approximately 178.6g of product was removed (brownish fluid)

The products of Examples 2 and 3 were blended into synthetic ester-based lubricants and evaluated for antioxidant performance using the Differential Scanning Calorimetry test method (DSC). The results are given below in Table 4.

DSC procedures are described in "Characterization of Lubricating Oils by Differential Scanning Calorimetry", Walker et al., SAE Technical Paper Series No. 801383, 1980, as well as in "Characterization of Lube Oils and Fuel Oils by DSC Analysis, F. Noel, Journal of the Institute of Petroleum, Vol. 57, No. 568, November, 1971, pp. 354 to 358.

**Table 4**

| DSC Test (Equilibrate at 30°C and ramp at 10°C/Min until 300°C under atmospheric pressure) | |
|---|---|
| Product Tested | Oxidation Onset Temperature |
| Synthetic ester stock | 221.5°C |
| 2% of Example 2 in above base oil | 262.8°C |
| 2% of Example 3 in above base oil | 252.1°C |

As can be seen from the data in Table 4, the borates of the invention exhibit significant antioxidant properties by improving the thermal/oxidative stability of the test lubricant, by more than 30°C.

As shown above, the products of this invention show very good antioxidant activity as evidenced by control of increase in acidity and viscosity, especially under the very severe conditions shown in Table 3. The products of this invention when used in premium quality automotive and industrial lubricants will significantly enhance the stability and extend the service life. These additives do not contain any potentially undesirable metals or chlorine and are ashless.

## Claims

1. A reaction product which is preparable by reacting:
(1) an unsubstituted or hydrocarbyl substituted hydroquinone or resorcinol of the formula: 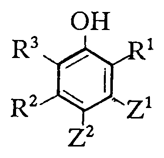 wherein R¹, R² and R³ represent a hydrogen atom or a C₁ to C₃₀ hydrocarbyl group; and one of Z¹ and Z² represents a hydroxyl group while the other represents a hydrogen atom or a C₁ to C₃₀ hydrocarbyl group; with
(2) an aliphatic hydroxyester containing at least one free hydroxyl group; and
(3) a borating agent.

2. A product according to claim 1 wherein the aliphatic hydroxyester comprises at least one of: 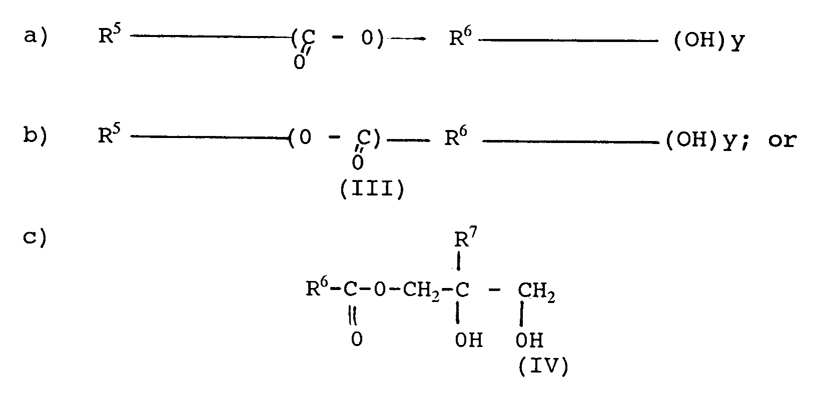 wherein:
y represents 1 or 2;
R⁵ and R⁶ each independently represent a C₃ to C₃₀ hydrocarbyl group; and
R⁷ represents H or CH₂OH; and
the borating agent is selected from boric acid, boric oxide, metaborates and (R¹⁰0)ₘ B(0H)ₙ wherein :
R¹⁰ represents a C₁ to C₆ alkyl group;
m represents 0 to 3;
n represents 0 to 3, and
m + n = 3

3. A product according to claim 1 or 2 wherein 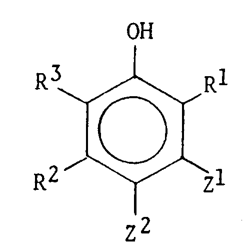 is hydroquinone and the aliphatic hydroxyester is 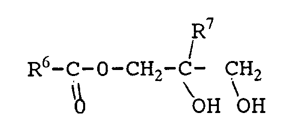 wherein: R⁶ represents a C₃ to C₃₀ hydrocarbyl group; and
R⁷ is H or CH₂OH.

4. A product according to claim 1 or 2 wherein 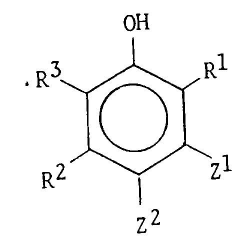 is resorcinol and the aliphatic hydroxyester is 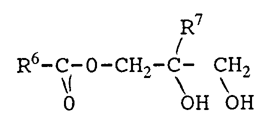 wherein: R⁶ represents a C₃ to C₃₀ hydrocarbyl group; and
R⁷ is H or CH₂OH.

5. A product according to any preceding claim wherein the aliphatic hydroxyester comprises glycerol monooleate.

6. A lubricant composition comprising a major proportion of a lubricating oil or grease therefrom, and an oxidation inhibiting amount of the product of any preceding claim.

7. A composition according to claim 6 wherein the lubricating oil is selected from mineral oil and synthetic oil.

8. A composition according to claim 6 or 7 comprising a major proportion of grease containing hydroxycarboxylate soap thickener.

9. Use of a product according to any of claims 1 to 5 to inhibit oxidation when added to a lubricant composition.

10. Use of a product according to any of claims 1 to 5 to enhance friction reduction when added to a lubricant composition.

## Patentansprüche

1. Reaktionsprodukt, herstellbar durch Umsetzung von:
(1) einem unsubstituierten oder hydrocarbylsubstituierten Hydrochinon oder Resorcin der Formel 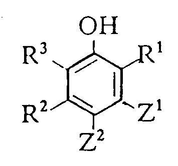 in der R¹, R² und R³ ein Wasserstoffatom oder einen C₁-C₃₀-Hydrocarbylrest bedeuten; und einer der Reste Z¹ und Z² eine Hydroxylgruppe bedeutet, während der andere Rest ein Wasserstoffatom oder einen C₁-C₃₀-Hydrocarbylrest bedeutet; mit
(2) einem aliphatischen Hydroxyester mit mindestens einer freien Hydroxylgruppe; und
(3) einem Borierungsmittel.

2. Produkt nach Anspruch 1, wobei der aliphatische Hydroxyester zumindest einen der folgenden Bestandteile umfaßt: 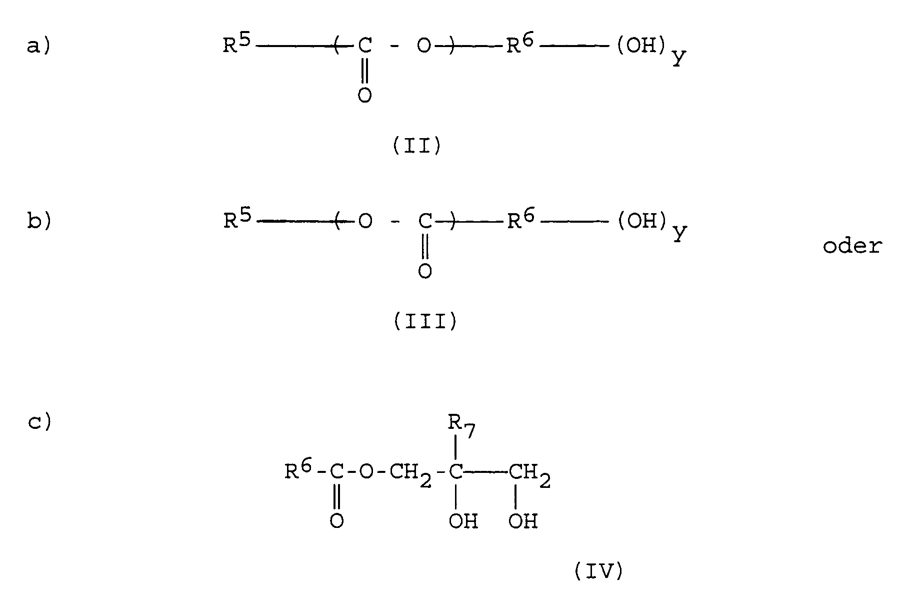 worin:
y 1 oder 2 bedeutet;
R⁵ und R⁶ jeweils unabhängig voneinander einen C₃-C₃₀-Hydrocarbylrest bedeuten; und
R⁷ H oder CH₂OH bedeutet; und
wobei das Borierungsmittel unter Borsäure, Boroxid, Metaboraten und (R¹⁰O)ₘB(OH)ₙ ausgewählt ist, worin:
R¹⁰ einen C₁-C₆-Alkylrest bedeutet;
m 0 bis 3 bedeutet;
n 0 bis 3 bedeutet; und
m + n = 3.

3. Produkt nach Anspruch 1 oder 2, wobei es sich bei 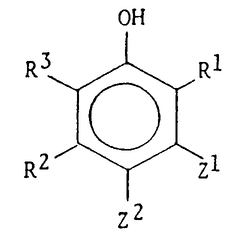 um Hydrochinon handelt und beim aliphatischen Hydroxyester um 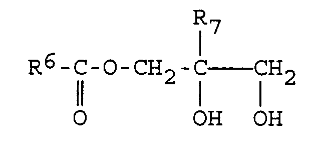 handelt,
worin:
R⁶ einen C₃-C₃₀-Hydrocarbylrest bedeutet; und
R⁷ H oder CH₂OH bedeutet.

4. Produkt nach Anspruch 1 oder 2, wobei es sich bei 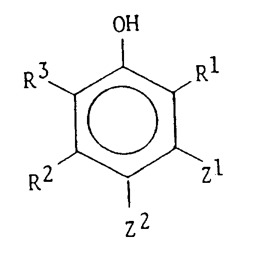 um Resorcin handelt und beim aliphatischen Hydroxyester um 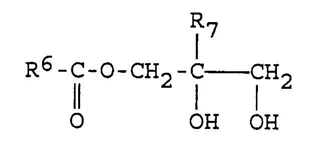 handelt,
wobei:
R⁶ einen C₃-C₃₀-Hydrocarbylrest bedeutet; und
R⁷ H oder CH₂OH bedeutet.

5. Produkt nach einem der vorstehenden Ansprüche, wobei der aliphatische Hydroxyester Glycerinmonooleat umfaßt.

6. Schmiermittelzusammensetzung, deren Hauptanteil ein Schmieröl oder Schmierfett daraus und eine oxidationshemmende Menge des Produkts nach einem dar vorstehenden Ansprüche ist.

7. Zusammensetzung nach Anspruch 6, wobei das Schmieröl unter Mineralöl und synthetischem Öl ausgewählt ist.

8. Zusammensetzung nach Anspruch 6 oder 7, deren Hauptanteil ein Scnmierfett mit einem Gehalt an einem Hydroxycarboxylatseifen-Verdickungsmittel ist.

9. Verwendung eines Produkts nach einem der Ansprüche 1 bis 5 zur Hemmung der Oxidation bei Zusatz zu einer Schmiermittelzusammensetzung.

10. Verwendung eines Produkts nach einem der Ansprüche 1 bis 5 zur Verstärkung der Reibungsverringerung bei Zusatz zu einer Schmiermittelzusammensetzung.

## Revendications

1. Produit de réaction obtenu par la réaction de:
(1) une hydroquinone ou résorcinol non substitué ou substitué par un radical hydrocarboné de formule: 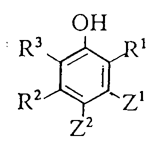 dans laquelle:
R¹, R² et R³ représentent un atome d'hydrogène ou un groupe hydrocarboné en C₁ à C₃₀; et
l'un des groupes Z¹ et Z² représente un groupe hydroxyle tandis que l'autre représente un atome d'hydrogène ou un groupe hydrocarboné en C₁ à C₃₀, avec
(2) un hydroxyester aliphatique comportant au moins un groupe hydroxyle libre; et
(3) un agent de boration.

2. Produit selon la revendication 1, dans lequel l'hydroxyester aliphatique comprend au moins un des composés: 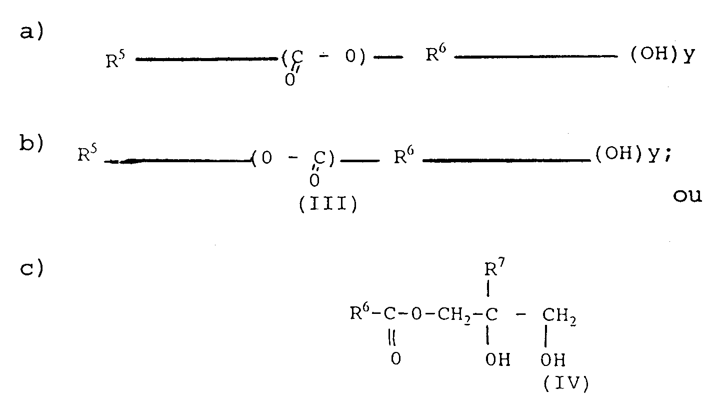 dans lesquelles:
y représente les nombres 1 ou 2;
R⁵ et R⁶, indépendamment l'un de l'autre, représentent un groupe hydrocarboné en C₃ à C₃₀; et
R⁷ représente un atome d'hydrogène ou CH₂OH; et
l'agent de boration est choisi parmi acide borique, oxyde borique, métaborates et (R¹⁰O)ₘ B(OH)ₙ, où
R¹⁰ représente un groupe alkyle en C₁ à C₆;
m est un nombre compris entre 0 et 3;
n est un nombre compris entre 0 et 3; et
m + n = 3.

3. Produit selon la revendication 1 ou 2, dans lequel: 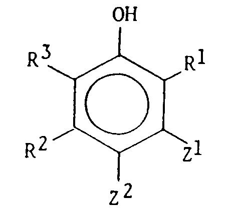 est l'hydroquinone, et l'hydroxyester aliphatique est: 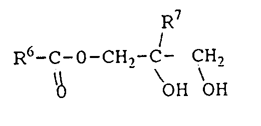 dans laquelle:
R⁶ représente un groupe hydrocarboné en C₃ à C₃₀; et
R⁷ est un atome d'hydrogène ou un groupe CH₂OH.

4. Produit selon la revendication 1 ou 2, dans lequel: 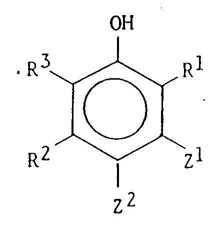 est le résorcinol et l'hydroxyester aliphatique est: 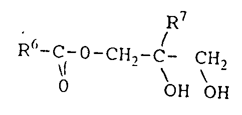 dans laquelle:
R⁶ représente un groupe hydrocarboné en C₃ à C₃₀; et
R⁷ est un atome d'hydrogène ou le groupe CH₂OH.

5. Produit selon l'une quelconque des revendications 1 à 4, dans lequel l'hydroxyester aliphatique comprend le mono-oléate de glycérol.

6. Composition lubrifiante renfermant une proportion principale d'huile ou graisse lubrifiante et une quantité inhibitrice d'oxydation du produit selon l'une quelconque des revendications 1 à 5.

7. Composition selon la revendication 6, dans laquelle l'huile lubrifiante est choisie parmi les huiles minérales et les huiles synthétiques.

8. Composition selon la revendication 6 ou 7, renfermant une proportion principale de graisse comportant un savon d'hydroxycarboxylate en tant qu'épaississant

9. Utilisation du produit selon l'une quelconque des revendications 1 à 5, pour inhiber l'oxydation lorsqu'on l'ajoute à une composition lubrifiante.

10. Utilisation d'un produit selon l'une quelconque des revendications 1 à 5 pour améliorer la diminution de la friction lorsqu'on l'ajoute à une composition lubrifiante.
